# FASCICULE DE BREVET EUROPEEN

(11) **EP 4 603 345 B1**
(45) Date de publication et mention de la délivrance du brevet: **25.11.2026**
(21) Numéro de dépôt: 25152732.1
(22) Date de dépôt: 20.01.2025
(51) Int. Cl.: B60T 7/10, B60T 7/20, B60T 11/04

(54) **FREIN À MAIN MÉCANIQUE ASSISTÉ**
KRAFTUNTERSTÜTZTE HANDBREMSE
POWER ASSISTED MECHANICAL HAND BRAKE

(30) Priorité: 25.01.2024 BE 202405041
(43) Date de publication de la demande: 20.08.2025
(73) Titulaire: Ets JOSKIN S.A., 4630 Soumagne (BE)
(72) Inventeur: JOSKIN, Victor, 4633 Melen (BE)
(74) Mandataire: AWA Benelux

(56) Documents cités:
- EP-A2- 0 319 994
- FR-A- 1 450 658
- JP-A- S62 273 151
- KR-A- 20090 116 411

## Description

### Objet de l'invention

La présente invention concerne les remorques et autres engins semi-portés ou tractés sur roues - lesquels seront ci-après génériquement désignés comme « remorques » pour la commodité de lecture - et se rapporte au domaine des dispositifs de freinage mécaniques, en particulier pour remorques agricoles ou forestières. Plus précisément, la présente invention propose un dispositif pour réduire la course nécessaire à l'activation d'un frein à main mécanique par rapport aux freins à main mécaniques de l'état de l'art, notamment pour une machine équipée d'un dispositif de frein à inertie couplé à un ou plusieurs essieu(x) à recul automatique.

### État de la technique

Le gabarit et, par conséquent, le poids des remorques, en particulier agricoles, ne cessent de croître à des fins de rentabilité. Cette évolution structurelle rend de plus en plus difficile la conception des dispositifs de frein de stationnement capables de satisfaire aux dispositions légales concernant la force minimale de freinage.

Dans la conception du dispositif de freinage des remorques, il existe un réel intérêt de pouvoir continuer à munir les remorques de petites tailles d'un dispositif mécanique de commande des freins d'essieu(x), plus économique que les dispositifs de commande hydraulique ou pneumatique.

Divers mécanismes sont apparus au fil du temps pour actionner les freins d'essieu(x) par l'intermédiaire de cordes, câbles, tringleries, etc., le cas échéant avec l'assistance d'un levier de commande ou autre actionneur similaire. Ces mécanismes sont progressivement disqualifiés par la masse et la vitesse grandissantes des trains de véhicules (tracteur + remorque), hormis le mécanisme de freinage à inertie.

Dans un mécanisme de freinage à inertie, la remorque exerce une force horizontale sur son véhicule de traction lorsque sa vitesse dépasse celle dudit véhicule de traction, par exemple en cas de freinage de ce dernier ou dans une (forte) descente. Cette force entraîne un élément capteur situé au niveau de l'accrochage de la remorque au véhicule de traction à produire une force horizontale de direction opposée sur l'extrémité d'une bielle dont l'autre extrémité est liée au(x) câble(s) ou tringlerie(s) de commande des freins d'essieu(x). L'oscillation de la bielle induite par la poussée de l'élément capteur exerce une traction sur le(s)dit(s) câble(s) ou tringlerie(s), actionnant ainsi les freins d'essieu(x).

Ce mécanisme de freinage à inertie a cependant un inconvénient : il entraîne la mise en service des freins d'essieu(x) de la remorque lorsque le véhicule de traction veut effectuer une marche arrière. En effet, en pareil cas, le véhicule de traction pousse lui-même sur l'élément capteur situé au niveau de l'accrochage de la remorque. Le train de véhicules est alors incapable de reculer (par sa force motrice).

Cette difficulté a été levée par la divulgation de l'essieu dit 'à recul automatique'. Pareil essieu équipé de freins qui ne sont pas activés en cas de marche arrière est par exemple décrit dans le document DE2161559. Dans ce dernier, le dispositif de support des patins de frein est construit de telle manière que, lors d'une rotation de l'essieu en marche arrière, un déplacement du patin secondaire (postérieur) en direction du patin primaire (antérieur) est rendu possible, réduisant de ce fait la distance entre les extrémités des patins de frein à un tel point que la course du dispositif d'actionnement des freins soit insuffisante pour induire un frottement significatif entre les patins de frein et le tambour. Ainsi, le freinage est désactivé en marche arrière.

Entre-temps, face à l'évolution des gabarits et masses admissibles des remorques, les règlements techniques de sécurité ont progressivement accru leurs exigences. Ainsi, dans le cadre des Règlements Européens 167/2013 et 68/2015, il est nécessaire que le frein de stationnement puisse permettre de maintenir la remorque immobile en charge sur une pente ascendante ou descendante possédant une inclinaison jusqu'à 18%. Il en va de même pour le dispositif de frein de secours, c'est-à-dire le dispositif permettant d'immobiliser la remorque en cas de rupture de l'accrochage au véhicule de traction.

Or, il n'existe pas, à l'heure actuelle, de dispositif de commande mécanique des freins d'essieu(x) à recul automatique capable d'exercer une traction suffisante pour satisfaire aux exigences légales en matière de force de freinage.

Le document DE3033582 A1 décrit par exemple un frein à main pour remorque agricole. Celui-ci est utilisé lorsque la remorque est dételée mais peut également être actionné lors de la conduite. Le dispositif de freinage comprend un levier positionné notamment sur le timon d'une remorque et agissant sur un câble de frein relié à un frein de roues. L'extrémité avant du levier est soutenue par un vérin à gaz. Le levier doit en premier lieu être actionné à la main avant que, passé un certain angle de rotation, le vérin à gaz ne permette d'exercer une force de traction continue sur le câble de frein entraînant la mise en service des freins de roues. Ce système de l'art antérieur est un système classique de frein à main pour remorques, mais ne permet pas de satisfaire aux exigences techniques légales actuelles, en particulier en cas d'essieu à recul automatique.

Le document WO200514355 A1 décrit un dispositif de freinage comprenant un dispositif de transmission de puissance sous forme de mouflage, c'est-à-dire un dispositif mécanique facilitant la traction d'une charge, grâce à un moyen de traction souple (corde, câble, courroie, ...) s'enroulant sur une ou plusieurs poulies, afin de démultiplier l'effort de traction. Le mouflage permettrait, selon ce document, de dévier et de répartir les efforts sur deux modules de freinage différents. Un des avantages du mouflage serait également que la force initiale appliquée au câble de freinage pourrait être augmentée afin que les modules de freinage soient sollicités par une force effective plus élevée. Selon le principe physique de la poulie, cette augmentation de force se fait cependant au détriment de la course qui doit s'en trouver allongée.

Le document CN217705781U décrit aussi un frein de parking muni d'un dispositif mécanique de transmission de puissance sous forme d'un mouflage. Dans cette divulgation, le mouflage est constitué d'un arrangement particulier de deux poulies mobiles placées entre le levier de frein à main et le dispositif de frein de roues et reliées entre-elles par des câbles. Un premier câble relie le levier de frein à main à la première poulie. Un deuxième câble ancré sur point fixe tire sur la seconde poulie en passant par la première, divisant ainsi la course nécessaire à l'activation du frein de parking. La seconde poulie est ainsi entraînée à exercer une traction sur un troisième câble reliant le dispositif de frein de roue gauche et le dispositif de frein de roue droite, ce qui a pour effet de répartir uniformément l'effort de traction entre les deux côtés. Ce système de l'art antérieur est peu compact et nécessite de l'espace sous la remorque pour être déployé, et le dispositif de répartition d'effort de traction contrecarre partiellement l'effet de réduction de course de la première poulie.

Le document FR 1 450 658 A décrit un frein de parking muni des poulies arrangées telles qu'elles permettent en utilisation de réduire la course nécessaire à l'activation du frein à main. L'activation de ce frein est assistée par un ressort.

Afin de pouvoir respecter les exigences légales relatives à la force de freinage, les dispositifs mécaniques actuels doivent dès lors être améliorés.

### Buts de l'invention

La présente invention a pour but de fournir une solution permettant d'améliorer la performance des dispositifs de freinage mécaniques des remorques agricoles ou forestières et autres engins semi-portés ou tractés sur roues - lesquels sont génériquement désignés dans le présent document comme « remorques ». En particulier, on vise l'obtention d'une course d'activation du frein à main mécanique moins élevée que celle des systèmes de freinages mécaniques classiques de l'art antérieur, de préférence en combinaison avec un dispositif de freinage à inertie et un essieu à recul automatique.

L'invention vise encore à fournir un dispositif de freinage mécanique assisté sur une remorque équipée éventuellement d'un essieu à recul automatique, permettant d'enclencher le freinage de la remorque lorsque celle-ci est stationnée dans une pente ascendante. Ceci permet d'éviter à la remorque de se mettre en mouvement spontanément en marche-arrière, et ce sans action extérieure.

L'invention vise également à procurer un dispositif de freinage mécanique assisté permettant de développer une force de freinage suffisante pour immobiliser des remorques de plus de 750 kg de Masse Maximale Autorisée (MMA), y compris des remorques agricoles de plus de 5 tonnes de MMA, sur une pente ascendante ou descendante présentant une inclinaison jusqu'à 18%.

Un autre but poursuivi par l'invention est de fournir un dispositif simple, compact, et avec des coûts de conception, de réparation et d'entretien abordables. L'enjeu de cette invention est de pouvoir concevoir des remorques de petits gabarits, au moins jusqu'à une masse maximale autorisée de 8 tonnes sans que ce chiffre soit limitatif de l'invention, respectant les dispositions légales de freinage au moyen d'un dispositif le plus simple, le moins encombrant et le plus économique possible.

L'invention vise encore à dissocier le dispositif de frein de stationnement du dispositif de frein de service par rapport aux dispositifs de freinages mécaniques classiques de l'art antérieur pour permettre un placement optimal et sécurisé du mécanisme d'actionnement du frein de stationnement.

L'invention vise également à proposer un mécanisme de frein de secours permettant d'actionner le dispositif de frein de roues en cas de rupture du dispositif de commande du frein de service lorsque la remorque est en mouvement.

Un autre but poursuivi par l'invention est d'offrir un levier de frein pouvant passer dans une position dite « de secours » en cas de réduction de tension du câble de freinage alors que le frein à main est en position de freinage, fournissant une tension supplémentaire de secours dans le câble de freinage.

### Principaux éléments caractéristiques de l'invention

La présente invention se rapporte à un dispositif de freinage mécanique assisté pour remorque et autre engin semi-porté ou tracté sur roues comprenant un frein de roue, le dispositif de freinage comprenant :
- un frein à main comprenant un levier de frein pouvant passer d'une première position dite « libre » à une seconde position dite « de freinage », un secteur de couronne crantée, un vérin d'amortissement à gaz situé entre le levier de frein et le secteur de couronne crantée, un axe de rotation du levier de frein permettant la rotation du levier de frein autour du secteur de couronne crantée et un cliquet situé sur le levier de frein et coopérant avec les crans du secteur de couronne crantée pour bloquer et maintenir le levier de frein dans sa position de freinage ;
- un câble de freinage connectant en utilisation ledit frein à main au frein de roue de la remorque ;
   ledit frein à main comprenant un mouflage formé d'au moins une poulie, préférablement d'au moins trois poulies, et dudit câble de freinage permettant en utilisation de réduire la course nécessaire à l'activation du frein à main sur le frein de roue de la remorque,
   le levier de frein comprenant une troisième position dite « de secours » dans laquelle il peut se positionner en cas de réduction de tension du câble de freinage, le vérin d'amortissement à gaz actionnant automatiquement le levier de frein pour le passer de la position de freinage à la position de secours et fournir une tension supplémentaire dans le câble de freinage.

Selon des formes d'exécution préférées de l'invention, le dispositif de freinage mécanique assisté comprend en outre une des caractéristiques suivantes, ou une combinaison appropriée de celles-ci :
- le frein à main est fixé sur un côté latéral du châssis de la remorque ;
- le frein à main est fixé par l'intermédiaire d'une équerre de montage ;
- les trois poulies comprennent deux poulies proximales fixées de part et d'autre du secteur de couronne crantée et une poulie distale fixée sur l'équerre de montage du frein à main ;
- l'équerre de montage du frein à main comprend une partie longitudinale fixée sur le côté latéral du châssis de la remorque, et une partie latérale substantiellement perpendiculaire à la partie longitudinale supportant la poulie distale du mouflage ;
- la poulie distale est montée ajustable sur ladite partie latérale, en sorte que la distance entre la poulie distale et les deux poulies proximales est variable ;
- la poulie distale est montée dans une fourche prolongée par une tige filetée traversant l'équerre de montage et tenue en position par un écrou ;
- le dispositif de frein de roues de la remorque comprenant un levier de frein de roue gauche et un levier de frein de roue droit, est caractérisé en ce que les poulies proximales sont parallèles entre elles et perpendiculaires à la poulie distale et en ce que le câble de freinage relie le levier de frein de roue gauche au levier de frein de roue droit, ou vice-versa, en passant successivement à travers l'équerre de montage, puis autour d'une première poulie proximale, puis de la poulie distale et puis de la seconde poulie proximale, et à nouveau à travers l'équerre de montage ;
- la disposition des poulies répartit uniformément les efforts entre les leviers de frein de roue gauche et droit du frein de roue.

La présente invention se rapporte également à une remorque ou autre engin semi-porté ou tracté sur roues comprenant le dispositif de freinage mécanique assisté. La remorque peut être équipée d'un dispositif de frein à inertie couplé à un ou plusieurs essieu(x) à recul automatique avec un frein de roue.

Selon des formes d'exécution préférées de l'invention, la remorque comprend en outre une des caractéristiques suivantes, ou une combinaison appropriée de celles-ci :
- le frein à main est fixé sur une paroi latérale du châssis ou sur le timon ;
- le dispositif de freinage réduit la course d'activation du frein à main par l'entremise du mouflage spécifique, et réserve une distance de course supplémentaire au long de laquelle le vérin à gaz pousse le levier du frein à main dans sa position de secours en cas de réduction de la tension du câble de frein alors que le levier était dans sa position de freinage ;
- un fil de frein de secours est lié au véhicule de traction et fixé via un mousqueton à un œillet solidaire du levier de frein à main du dispositif de freinage mécanique, permettant l'actionnement du frein à main à partir du véhicule de traction en mouvement.

### Brève description des figures

La figure 1a représente une vue du dispositif de freinage mécanique assisté complet monté sur un châssis d'une remorque agricole, permettant de visualiser l'agencement global des composants principaux de l'invention.
La figure 1b représente une vue du dessous de l'équipement représenté en figure 1a, montrant le passage du câble de freinage reliant le dispositif de freinage mécanique assisté de la présente invention jusqu'à l'essieu et au frein de roues.
La figure 2 représente une vue en plan du dispositif de freinage assisté d'une forme d'exécution de la présente invention, permettant de détailler son fonctionnement.
La figure 3 représente une vue rapprochée en trois dimensions d'une forme d'exécution du dispositif de freinage selon la présente invention, le dispositif de freinage étant attaché sur le côté du châssis d'une remorque agricole.
La figure 4 représente une vue en trois dimensions du dispositif de freinage de frein de roues du dispositif de freinage des figures 1a et 1b.

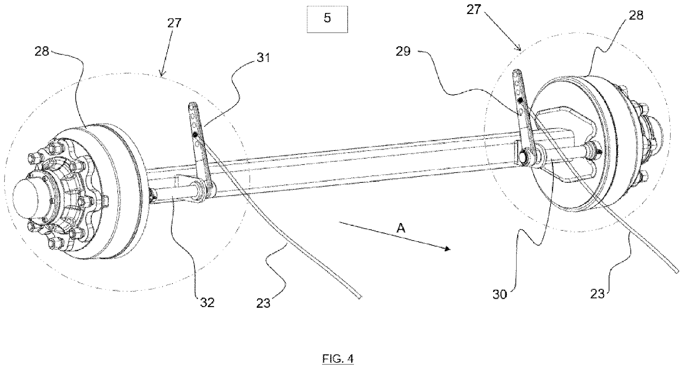

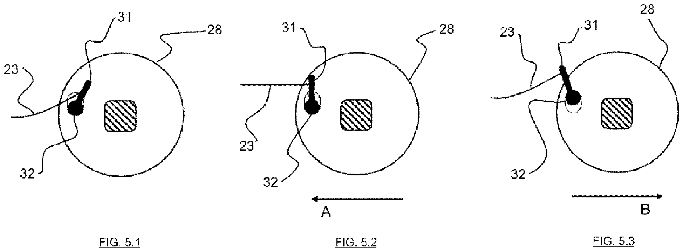

La figure 5 représente de manière schématisée une vue en coupe de l'essieu de la figure 4 de manière à illustrer le fonctionnement du dispositif de frein de roue du dispositif de freinage de la présente invention en combinaison avec un essieu à recul automatique. La figure 5.1 représente le dispositif de frein de roue droit dans son état non-freiné, avec le levier de frein dans sa première position, dite « libre ». La figure 5.2 représente le dispositif de frein de roue droit dans son état freiné en marche avant, avec le levier de frein dans sa seconde position, dite « de freinage ».. La figure 5.3 représente le dispositif de frein de roue droit dans son état non-freiné à la suite d'un déplacement en marche arrière.

### Description d'une forme d'exécution préférée de l'invention

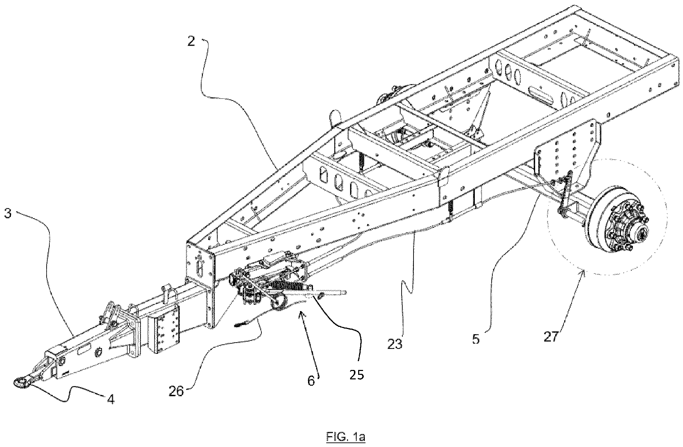

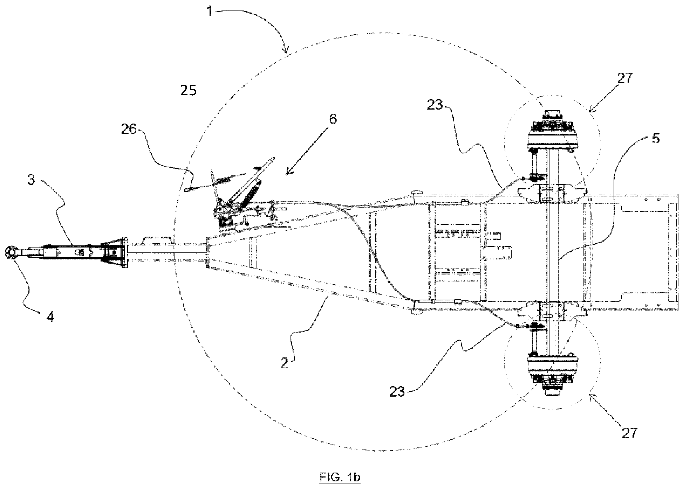

Le dispositif de freinage mécanique assisté 1 pour remorques selon la présente invention concerne un frein de stationnement, encore appelé frein à main ou frein de parking, visible sur les figures 1a et 1b, qui peut être placé sur le châssis 2 de la remorque, et plus précisément à l'avant du châssis 2 ou sur le timon 3 de celle-ci.

Tel qu'illustré sur les figures 1a et 1b, le dispositif de freinage 1 comprend un frein à main 6 permettant d'actionner un dispositif de frein de roues 27 situé de part et d'autre d'un essieu 5 via un câble de freinage 23. De préférence, le frein à main 6 est fixé sur la partie latérale gauche à l'avant du châssis 2 de la remorque.

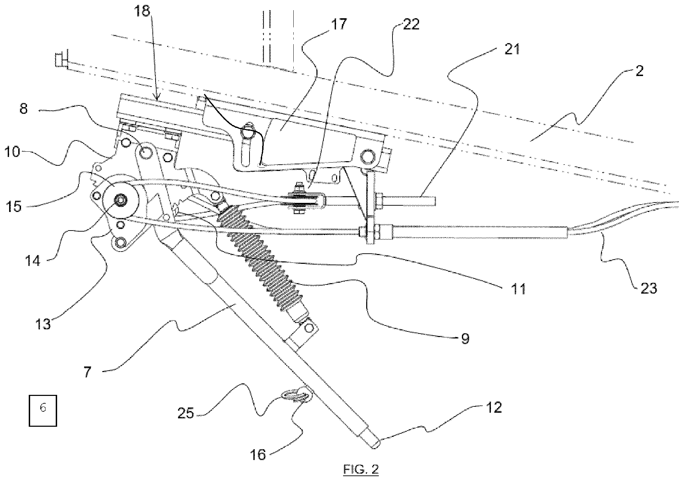

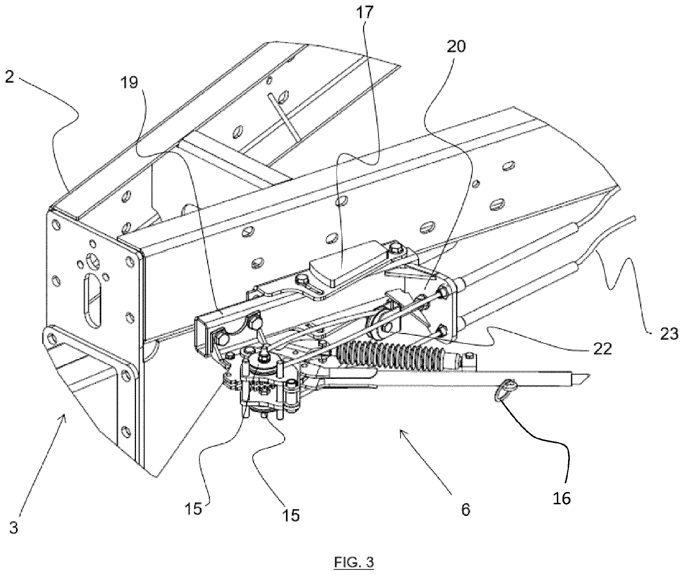

Comme représenté en figures 2 et 3, le frein à main 6 en tant que tel comprend un levier de frein à main 7 pivotant autour d'un axe de rotation 8 et fixé sur un secteur de couronne crantée 10. Un cliquet 11 prévu à la base du levier de frein à main 7 permet de coopérer avec les dents du secteur de couronne crantée 10 afin de bloquer le levier de frein 7 dans une position serrée. Le frein à main 6 agit sur un câble de freinage 23, qui sera mis sous tension ou détendu selon la position du levier de frein 7. Un vérin à gaz 9 soutient le levier de frein 7 dont l'effet expansif, une fois sa ligne d'action passée outre le point mort du mécanisme, permet un freinage efficace ainsi qu'une aide à l'utilisateur pour fournir l'effort de traction et le maintenir quelle que soit la position angulaire du levier de frein 7 sur le secteur de couronne crantée 10.

Le dispositif 1 comprend de préférence une équerre de montage 18 afin de fixer le frein à main 6 sur le châssis 2 de la remorque. L'équerre de montage 18 illustrée sur les figures 2 et 3 comprend une partie longitudinale 19 qui permet la fixation de préférence sur le châssis 2 ou sur le timon 3 de la remorque, et une partie latérale 20 de préférence perpendiculaire à la partie longitudinale 19. La partie longitudinale 19 peut être fixée directement sur le châssis, ou via un élément intermédiaire 17. Un câble de frein 23 dédié est utilisé pour relier le frein à main 6 à l'essieu 5 et à son dispositif de frein de roues 27.

Le frein à main 6 varie entre une première position dite « libre » et une seconde position dite « de freinage ». Par position libre, il est entendu que le frein à main 6 n'est pas enclenché et qu'il n'a donc pas d'impact sur le dispositif de frein de roue 27 de la remorque. Dans ce cas, le câble de freinage 23 est détendu. Par position de freinage, il est entendu que le frein à main 6 agit sur le câble de freinage 23 de sorte à le mettre sous tension, ce qui actionne le dispositif de frein de roues 27 de la remorque. Dans ce cas, le levier de frein 7 est tiré et effectue une rotation dans le sens des aiguilles d'une montre autour de l'axe 8. Le cliquet 11 présent à la base du levier de frein 7 se retrouve bloqué entre deux dents du secteur de couronne crantée 10. Pour passer à la position libre, l'utilisateur doit pousser sur le bouton poussoir 12 situé à l'extrémité du levier de frein 7, ce qui permet d'écarter le cliquet 11 des dents du secteur de couronne crantée 10 par pivotement, et donc de désolidariser le levier 7 du secteur de couronne crantée 10. De cette manière, le levier de frein 7 peut effectuer une rotation dans le sens inverse, ce qui détend le câble de freinage 23 et desserre le dispositif de frein de roues 27.

Selon l'invention, le levier de frein 7 peut également être positionné dans une troisième position, dite « de secours ». Cette position est enclenchée lorsque le câble de freinage 23 se détend alors que le frein à main 6 est en position de freinage. Dans ce cas, le vérin d'amortissement à gaz 9 permet d'actionner automatiquement le levier de frein 7 pour le passer de la position de freinage à la position de secours et fournir une tension supplémentaire dans le câble de freinage 23, le levier de frein 7 effectuant une rotation supplémentaire dans le sens des aiguilles d'une montre autour de l'axe 8. Le frein à main de la présente invention comprend une distance de course supplémentaire au long de laquelle le vérin à gaz peut actionner le levier de sa position de freinage à sa position de secours, ceci en cas de réduction de la tension du câble de frein.

Selon la présente invention, le frein à main 6 comprend un mouflage spécifique destiné à réduire la course que le câble de freinage 23 doit parcourir pour permettre l'activation du frein. Dans l'exemple de forme d'exécution représenté, le mouflage comprend au moins une poulie et de préférence trois poulies 15, 22. Deux poulies 15, dites proximales, sont placées à la base du levier du frein à main 7. Elles peuvent par exemple être fixées de part et d'autre du levier de frein à main 7, sur des surfaces parallèles au plan horizontal passant par l'axe longitudinal du levier de frein 7 et à égale distance de l'axe longitudinal du levier de frein, leurs axes de rotation 14 pouvant également être alignés de manière à ce que la force résultante du système soit située sur ce même plan horizontal, permettant ainsi de garantir une efficacité maximale du dispositif de freinage. L'axe de rotation 14 des poulies proximales 15 est fixé sur le levier 7 à une distance soigneusement choisie de l'axe de rotation 8 du levier 7, cette distance conditionnant directement les performances du dispositif de freinage objet de la présente invention. La fixation des poulies proximales 15 sur le levier de frein à main 7 peut se faire notamment via un élément de support intermédiaire 13 telle qu'une entretoise placée de part et d'autre du levier 6 et entre les poulies proximales 15. Une poulie supplémentaire, dite poulie distale 22, est fixée de préférence sur l'équerre de montage 18, et de préférence encore sur la partie latérale 20 de cette équerre 18 qui a donc pour fonction de servir de support à une ou plusieurs poulies distales 22. Il en résulte que, relativement au châssis 2 de la remorque, les poulies proximales 15 sont mobiles alors que les poulies distales 22 sont fixes.

Le fonctionnement d'un essieu peut être expliqué à l'aide de la figure 4. Le câble de freinage 23 actionne le dispositif de frein de roues 27 en transmettant un effort de traction sur les leviers de frein de roue gauche 29 et droite 31. À la suite de la traction émise sur le câble de freinage 23 par le frein à main 6, les leviers de frein de roue 29 et 31 vont pivoter vers l'avant, ce qui provoque une rotation de cames de frein de roue 30 et 32 de l'essieu 5, lesquelles sont en connexion avec deux tambours de frein 28 présents aux extrémités de l'essieu. La rotation des cames de frein 30 et 32 va provoquer le déplacement des patins de frein (non représentés) situés à l'intérieur des tambours. Il en découle une mise en contact des garnitures de freinage situées sur les patins avec chaque tambour de frein 28, ce qui génère, par frottement, une résistance à la rotation des roues de la remorque, et qui conduit finalement à l'immobilisation de celles-ci.

La remorque selon l'invention peut également être équipée d'un dispositif de freinage dit « à inertie » qui pilote un essieu dit « à recul automatique ». Ce type de dispositif de freinage est constitué principalement d'un timon 3 spécifique avec son œillet d'attelage 4 et d'un essieu 5 spécifique tel que décrit dans le document DE2161559. Le principe de fonctionnement d'un tel dispositif de freinage peut être expliqué à l'aide des figures 5.1, 5.2 et 5.3.

En cas de ralentissement du véhicule de traction lors d'un déplacement en marche avant A, le câble de frein 23 reliant le timon 3 au levier de frein de roue 31 est mis en tension par le déplacement relatif de l'œillet d'attelage 4 dans le timon 3. La tension du câble de frein 23 exerce une traction sur le levier de frein de roue 31, ce qui a pour effet de freiner la remorque selon le processus décrit au paragraphe précédent et schématiquement représenté en Figure 5.2.

Un mécanisme spécial, dit de recul automatique, interne au tambour de frein 28 permet de désactiver le freinage de la remorque lorsqu'elle effectue un déplacement en marche arrière B, là où un essieu classique commandé par un dispositif de freinage à inertie se mettrait à freiner sous l'effet de la poussée du véhicule de traction sur l'œillet d'attelage 4, empêchant de ce fait toute manœuvre dans cette direction. Le mécanisme de recul automatique permet à la came de frein 32 de réaliser un déplacement axial doublé d'une rotation le long d'un oblong situé sur les tambours de frein 28 lorsque les roues amorcent une rotation dans le sens du recul. La rotation de la came de frein 32 entraîne un déplacement du levier de frein de roue 31 qui génère une réduction de la distance le séparant du dispositif actionneur du timon 3 telle que le déplacement de l'œillet 4 dans le timon 3 ne génère pas une course suffisante pour mettre le câble de frein 23 en tension, le frein de la remorque n'étant donc pas activé (Figure 5.3). Cette suite d'évènements est également applicable au dispositif de freinage gauche de la remorque.

Le même phénomène de non-activation du freinage se produit chaque fois que la remorque amorce un déplacement vers l'arrière, qu'il soit dû à une poussée du véhicule de traction, que ce dernier soit à l'arrêt en pente ascendante sans freiner, ou que la remorque soit entraînée par sa masse en situation non attelée dans une pente ascendante.

Dans l'état de l'art, le frein de service et le frein de stationnement utilisent fréquemment un câble de frein unique et commun pour transmettre la commande de frein vers l'essieu. Au moins dans le cas d'un essieu à recul automatique, cette conception pose problème lorsque la remorque est stationnée non attelée en pente ascendante : hors l'usage de cales de roues, la remorque se met en mouvement spontanément ou de manière non désirée à cause de la conception même de l'essieu. Or, la réglementation exige une efficacité du dispositif de freinage de la remorque, même en l'absence de cales de roues.

Le dispositif de frein mécanique assisté 1 déporté et à course réduite de la présente invention résout ce problème, notamment grâce à la position de secours du levier de frein 7.

Dans le cas particulier du mode d'exécution représenté sur les figures, le câble de freinage 23 s'étend depuis une extrémité fixée au levier de frein de roue gauche 29 jusqu'à une autre extrémité fixée au levier de frein de roue droit 31, en passant autour du mouflage 15, 22 du frein à main 6. Partant d'une extrémité, le câble 23 est enroulé successivement autour d'une première poulie proximale 15, de la poulie distale 22, et enfin de la seconde poulie proximale 15, avant de ressortir du mouflage et repartir en direction de l'autre extrémité.

De préférence, chaque brin de câble de freinage 23 lié à une extrémité traverse la partie latérale 20 de l'équerre 18 par un orifice respectif pratiqué dans celle-ci.

Cette disposition des poulies et du câble de freinage 23 produit une répartition optimale de la force de traction entre les tambours de frein gauche et droit pour une efficacité de freinage accrue et optimise l'encombrement du mouflage en libérant l'espace situé en amont de l'essieu sous la remorque.

La poulie distale 22 est de préférence réglable. Par exemple, dans le cas du mode d'exécution représenté, celle-ci est fixée à la partie latérale 20 de l'équerre de montage 18 à l'aide d'une fourche 21 réglable, par exemple par tige filetée et écrou. Cette faculté de réglage permet d'ajuster la position de la poulie 22 pour régler la distance entre celle-ci et les deux poulies proximales 15. De cette manière, le réglage du dispositif de freinage 1 peut être ajusté en augmentant ou en diminuant la tension initiale dans le câble de freinage 23.

Selon la disposition des poulies décrite ci-avant, l'effet du mouflage permet avantageusement de diviser par deux la course au levier de frein 7 nécessaire à l'activation du freinage tout en conservant un équilibre entre la force appliquée sur les leviers de frein gauche 29 et droit 31. Un déplacement des poulies proximales 15 d'une unité de longueur entraîne un déplacement des deux extrémités du câble 23 de deux unités de longueur.

L'interaction des différents éléments de la présente invention permet à la remorque de disposer d'un dispositif de freinage mécanique assisté efficace aussi bien dans une pente ascendante que descendante. La mise au point demande un réglage initial de la tension dans le câble de telle manière qu'en position libre, le levier de frein 7 ne soit pas encliqueté dans le secteur de couronne crantée 10, et que le pivotement du levier de frein 7 autour de son axe 8 permettant d'enclencher la position de freinage puisse se faire avec une force humaine, par exemple moins de 40 kg, jusqu'à dépasser le point de poussée du vérin à gaz 9.

Lorsque le cliquet 11 situé sur le levier 7 s'emboîte dans les premiers crans du secteur de couronne crantée 10, le frein de stationnement produit alors une tension suffisante dans le câble 23 pour maintenir immobile la remorque stationnée en pente négative.

Dans le cas d'une remorque à essieu à recul automatique stationnée en pente positive, lorsque le mécanisme de recul automatique situé dans les tambours 28 s'active, les cames de frein 30 et 32 réalisent une rotation qui détend le câble de frein 23. Cette réduction de tension est automatiquement compensée par le vérin à gaz 9 qui exerce une force de poussée sur le levier de frein 7, déplaçant ce dernier jusqu'à sa position de secours, afin de tendre à nouveau le câble de frein 23 par l'entremise du mouflage. Ceci active le dispositif de frein de roue 27 de la remorque et l'immobilise sur la pente.

La présente invention concerne également une remorque équipée du dispositif de freinage 1 dont un exemple d'exécution préféré a été décrit ci-dessus. De préférence, le frein à main 6 est fixé sur la paroi latérale du châssis 2 de la remorque. Cette position permet d'excentrer au maximum le levier de frein 7 qui sera actionné par l'utilisateur. En effet, la partie centrale entre le timon 3 et le véhicule tracteur est l'endroit le plus étroit et comportant le plus de risques pour l'utilisateur, par exemple en cas de rupture de l'attelage ou d'éléments mécaniques tel qu'un cardan toujours en rotation pendant que l'utilisateur actionne le dispositif de freinage mécanique assisté 1. Par ailleurs, par rapport à une position centrale « naturelle » au-dessus du timon telle que décrite dans l'état de l'art, la position latérale sur l'avant châssis permet avantageusement de libérer l'espace au-dessus du timon 3 pour une autre utilisation, par exemple le passage de conduites hydrauliques, pneumatiques ou électriques ou encore d'un cardan. Cette disposition latérale se trouve aussi avantageuse pour la localisation des poulies, permettant un accès plus direct entre le frein à main 6 et le dispositif de frein de roues 27 et donc une meilleure transmission de la force de freinage.

Lorsque la remorque est attelée à un véhicule de traction, un dispositif de secours peut également être prévu afin d'actionner le frein à main 6 à l'appui ou en lieu et place du dispositif de commande du frein de service, par exemple dans l'éventualité d'une rupture de l'œillet d'attelage 4. Pour ce faire, tel qu'illustré par les figures 1a et 1b, un fil de sécurité 26, constitué par exemple d'un câble ou d'une corde, relie le levier de frein à main 7 au véhicule de traction. Le fil 26 est par exemple attaché par l'entremise d'un mousqueton 25 à un œillet 16 solidaire du levier de frein à main 7. Un ancrage similaire pouvant ou non comprendre également un levier de frein est disposé du côté du véhicule de traction. En cas de rupture de l'attelage ou d'actionnement du levier disposé dans le véhicule de traction, la corde 26 actionne le frein à main 6.

Le mousqueton 25 est dimensionné pour résister à une force suffisante, par exemple 40 kg, pour actionner le frein à main 6 et assez faible pour permettre au fil de frein de secours 26 de se séparer si nécessaire de la remorque après activation du frein à main 6, par exemple en cas de rupture d'attelage.

### Liste des symboles de référence

- 1: Dispositif de freinage mécanique assisté
- 2: Châssis de remorque
- 3: Timon de remorque
- 4: Œillet d'attelage
- 5: Essieu
- 6: Frein à main mécanique de stationnement ou de parking
- 7: Levier de frein à main
- 8: Axe de rotation du levier de frein à main
- 9: Vérin à gaz
- 10: Secteur de couronne crantée
- 11: Cliquet
- 12: Bouton poussoir du levier de frein à main
- 13: Support pour poulies proximales
- 14: Poulies proximales
- 15: Axe de rotation des poulies proximales
- 16: Œillet
- 17: Élément intermédiaire de fixation de l'équerre de montage
- 18: Équerre de montage du frein à main
- 19: Partie longitudinale de l'équerre de montage
- 20: Partie transversale de l'équerre de montage
- 21: Fourche ajustable de la poulie distale
- 22: Poulie distale
- 23: Câble de freinage
- 25: Mousqueton
- 26: Fil de frein secours
- 27: Dispositif de frein de roue
- 28: Tambours de frein de roues
- 29: Levier de frein de roue gauche
- 30: Came de frein de roue gauche
- 31: Levier de frein de roue droit
- 32: Came de frein de roue droite
- A: Sens de marche (avant)
- B: Sens de marche (arrière)

## Revendications

1. Dispositif de freinage mécanique assisté (1) pour remorque et autre engin semi-porté ou tracté sur roues comprenant un frein de roue (27), ledit dispositif de freinage (1) comprenant :
- un frein à main (6) comprenant un levier de frein (7) pouvant passer d'une première position dite « libre » à une seconde position dite « de freinage », un secteur de couronne crantée (10), un vérin d'amortissement à gaz (9) situé entre le levier de frein (7) et le secteur de couronne crantée (10), un axe de rotation (8) du levier de frein (7) permettant la rotation du levier de frein (7) autour du secteur de couronne crantée (10) et un cliquet (11) situé sur le levier de frein (7) et coopérant avec les crans du secteur de couronne crantée (10) pour bloquer et maintenir le levier de frein (7) dans sa position de freinage;
- un câble de freinage (23) connectant en utilisation ledit frein à main (6) au frein de roue (27) de la remorque ;
ledit frein à main (6) comprenant un mouflage formé d'au moins une poulie, préférablement d'au moins trois poulies (15, 22), et dudit câble de freinage (23) permettant en utilisation de réduire la course nécessaire à l'activation du frein à main (6) sur le frein de roue (27) de la remorque,
**caractérisé en ce que** le levier de frein (7) comprend une troisième position dite « de secours » dans laquelle il peut se positionner en cas de réduction de tension du câble de freinage (23), le vérin d'amortissement à gaz (9) actionnant automatiquement le levier de frein (7) pour le passer de la position de freinage à la position de secours et fournir une tension supplémentaire dans le câble de freinage (23).

2. Dispositif de freinage mécanique (1) selon la revendication 1, la remorque comprenant un châssis (2), **caractérisé en ce que** le frein à main (6) est fixé sur un côté latéral du châssis (2) de la remorque.

3. Dispositif de freinage mécanique (1) selon l'une des revendications 1 ou 2, **caractérisé en ce que** le frein à main (6) est fixé par l'intermédiaire d'une équerre de montage (18).

4. Dispositif de freinage mécanique (1) selon la revendication 3, **caractérisé en ce que** les trois poulies (15, 22) comprennent deux poulies proximales (15) fixées de part et d'autre de la section de disque cranté (10) et une poulie distale (22) fixée sur l'équerre de montage (18) du frein à main (6).

5. Dispositif de freinage mécanique (1) selon la revendication 3, **caractérisé en ce que** l'équerre de montage (18) du frein à main (6) comprend une partie longitudinale (19) fixée sur le côté latéral du châssis (2) de la remorque, et une partie latérale (20) substantiellement perpendiculaire à la partie longitudinale (19) supportant la poulie distale (15) du mouflage.

6. Dispositif de freinage mécanique (1) selon l'une quelconque des revendications 4 et 5, **caractérisé en ce que** la poulie distale (22) est montée ajustable sur ladite partie latérale (20), en sorte que la distance entre la poulie distale (22) et les deux poulies proximales (15) est variable.

7. Dispositif de freinage mécanique (1) selon la revendication 6, **caractérisé en ce que** la poulie distale (22) est montée dans une fourche (21) prolongée par une tige filetée traversant de l'équerre de montage (18) et tenue en position par un écrou.

8. Dispositif de freinage mécanique (1) selon l'une quelconque des revendications précédentes, le dispositif de frein de roues (27) de la remorque comprenant un levier de frein de roue gauche (29) et un levier de frein de roue droit (31), **caractérisé en ce que** les poulies proximales (15) sont parallèles entre elles et perpendiculaires à la poulie distale (22) et **en ce que** le câble de freinage (23) relie le levier de frein de roue gauche (29) au levier de frein de roue droit (31), ou vice-versa, en passant successivement à travers l'équerre de montage (18), puis autour d'une première poulie proximale (15), puis de la poulie distale (22) et puis de la seconde poulie proximale (15), et à nouveau à travers l'équerre de montage (18).

9. Dispositif de freinage mécanique (1) selon la revendication 8, **caractérisé en ce que** la disposition des poulies répartit uniformément les efforts entre les leviers de frein de roue gauche (29) et droit (31) du frein de roue (27).

10. Remorque ou autre engin semi-porté ou tracté sur roues comprenant un dispositif de freinage mécanique (1) selon l'une quelconque des revendications précédentes.

11. Remorque ou autre engin semi-porté ou tracté sur roues selon la revendication 10, **caractérisé en ce qu'**il comprend un dispositif de frein à inertie couplé à un ou plusieurs essieu(x) à recul automatique avec un frein de roue (27).

12. Remorque ou autre engin semi-porté ou tracté sur roues selon l'une quelconque des revendications 10 et 11, **caractérisé en ce qu'**il comprend un châssis (2) et un timon (3) et **en ce que** le frein à main (6) est fixé sur une paroi latérale du châssis (2) ou sur le timon (3).

13. Remorque ou autre engin semi-porté ou tracté sur roues selon l'une quelconque des revendications 10 à 12, **caractérisé en ce que** le dispositif de freinage (1) réduit la course d'activation du frein à main (6) par l'entremise du mouflage spécifique, et réserve une distance de course supplémentaire au long de laquelle le vérin à gaz (9) pousse automatiquement le levier (7) du frein à main (6) dans une position de secours en cas de réduction de la tension du câble de frein (23) alors que le levier de frein (7) était dans une position de freinage.

14. Remorque ou autre engin semi-porté ou tracté sur roues, selon l'une quelconque des revendications 10 à 13, la remorque ou autre engin semi-porté ou tracté sur roues étant tracté ou semi-porté par un véhicule de traction, **caractérisé en ce qu'**un fil de frein de secours (26) est lié au véhicule de traction et fixé via un mousqueton (25) à un œillet (16) solidaire du levier de frein à main (7) du dispositif de freinage mécanique (1), permettant l'actionnement du frein à main (6) à partir du véhicule de traction en mouvement.

## Patentansprüche

1. Mechanische unterstützte Bremsvorrichtung (1) für einen Anhänger und ein anderes auf Rädern stehendes, halbgetragenes oder gezogenes Fahrzeug, das eine Radbremse (27) umfasst, wobei die Bremsvorrichtung (1) Folgendes umfasst:
- eine Handbremse (6) mit einem Bremshebel (7), der von einer ersten, "frei" genannten Position in eine zweite, "Bremsposition" genannte Position bewegt werden kann, eine Zahnkranzsektion (10), einen Gasdruckdämpfer (9), der zwischen dem Bremshebel (7) und der Zahnkranzsektion (10) angeordnet ist, eine Drehachse (8) des Bremshebels (7), die die Drehung des Bremshebels (7) um die Zahnkranzsektion (10) ermöglicht, und eine Sperrklinke (11), die sich am Bremshebel (7) befindet und mit den Rastungen der Zahnkranzsektion (10) zusammenwirkt, um den Bremshebel (7) in seiner Bremsposition zu arretieren und zu halten;
- ein Bremsseil (23), das im Betrieb die Handbremse (6) mit der Radbremse (27) des Anhängers verbindet;
wobei die Handbremse (6) ein Flaschenzugsystem umfasst, das aus mindestens einer, vorzugsweise mindestens drei Seilrollen (15, 22) und dem Bremsseil (23) besteht und im Betrieb ermöglicht, den zur Betätigung der Handbremse (6) an der Radbremse (27) des Anhängers erforderlichen Hub zu verringern,
**dadurch gekennzeichnet, dass** der Bremshebel (7) eine dritte, "Notfallposition" genannte Position aufweist, in die er bei einer Spannungsabnahme des Bremsseils (23) gebracht werden kann, wobei der Gasdruckdämpfer (9) es ermöglicht, den Bremshebel (7) automatisch zu betätigen, um ihn von der Bremsposition in die Notposition zu bringen und eine zusätzliche Spannung im Bremsseil (23) bereitzustellen.

2. Mechanische Bremsvorrichtung (1) nach Anspruch 1, wobei der Anhänger ein Fahrgestell (2) aufweist, **dadurch gekennzeichnet, dass** die Handbremse (6) an einer Seitenwand des Fahrgestells (2) des Anhängers befestigt ist.

3. Mechanische Bremsvorrichtung (1) nach einem der Ansprüche 1 oder 2, **dadurch gekennzeichnet, dass** die Handbremse (6) über einen Montagewinkel (18) befestigt ist.

4. Mechanische Bremsvorrichtung (1) nach Anspruch 3, **dadurch gekennzeichnet, dass** die drei Seilrollen (15, 22) zwei proximale, beidseitig am der Zahnkranzsektion befestigte Seilrollen (15) und eine distale, am Montagewinkel (18) der Handbremse (6) befestigte Seilrolle (22) umfassen.

5. Mechanische Bremsvorrichtung (1) nach Anspruch 3, **dadurch gekennzeichnet, dass** der Montagewinkel (18) der Handbremse (6) einen Längsabschnitt (19) aufweist, der an der Seitenwand des Anhängerrahmens (2) befestigt ist, und einen Seitenabschnitt (20), der im Wesentlichen senkrecht zum Längsabschnitt (19) steht und die distale Rolle (15) des Flaschenzugsystems trägt.

6. Mechanische Bremsvorrichtung (1) nach einem der Ansprüche 4 und 5, **dadurch gekennzeichnet, dass** die distale Seilrolle (22) verstellbar an dem genannten Seitenabschnitt (20) angebracht ist, sodass der Abstand zwischen der distalen Seilrolle (22) und den beiden proximalen Seilrollen (15) variabel ist.

7. Mechanische Bremsvorrichtung (1) nach Anspruch 6, **dadurch gekennzeichnet, dass** die distale Seilrolle (22) in einer Gabel (21) gelagert ist, die durch eine Gewindestange verlängert wird, die den Montagewinkel (18) durchquert, und durch eine Mutter in ihrer Position gehalten wird.

8. Mechanische Bremsvorrichtung (1) nach einem der vorstehenden Ansprüche, wobei die Vorrichtung der Radbremsen (27) des Anhängers einen linken Radbremshebel (29) und einen rechten Radbremshebel (31) umfasst, **dadurch gekennzeichnet, dass** die proximalen Seilrollen (15) parallel zueinander und senkrecht zur distalen Seilrolle (22) angeordnet sind und dass das Bremsseil (23) den linken Radbremshebel (29) mit dem rechten Radbremshebel (31) verbindet oder umgekehrt, wobei es nacheinander durch den Montagewinkel (18), dann um eine erste proximale Seilrolle (15), anschließend um die distale Seilrolle (22) und dann um die zweite proximale Seilrolle (15) sowie erneut durch den Montagewinkel (18) verläuft.

9. Mechanische Bremsvorrichtung (1) nach Anspruch 8, **dadurch gekennzeichnet, dass** die Anordnung der Seilrollen die Kräfte gleichmäßig auf den linken (29) und den rechten (31) Radbremshebel der Radbremse (27) verteilt.

10. Anhänger oder anderes Halb- oder Vollanhängerfahrzeug auf Rädern, das eine mechanische Bremsvorrichtung (1) gemäß einem der vorstehenden Ansprüche umfasst.

11. Anhänger oder anderes Halb- oder Vollanhängerfahrzeug auf Rädern gemäß Anspruch 10, **dadurch gekennzeichnet, dass** er eine mit einer oder mehreren Achsen gekoppelte Auflaufbremse mit automatischer Rückstellung und einer Radbremse (27) umfasst.

12. Anhänger oder anderes Halb- oder Vollanhängerfahrzeug auf Rädern gemäß einem der Ansprüche 10 und 11, **dadurch gekennzeichnet, dass** er einen Rahmen (2) und eine Deichsel (3) umfasst und dass die Handbremse (6) an einer Seitenwand des Rahmens (2) oder auf der Deichsel (3) befestigt ist.

13. Anhänger oder anderes Halb- oder Vollanhängerfahrzeug auf Rädern gemäß einem der Ansprüche 10 bis 12, **dadurch gekennzeichnet, dass** die Bremsvorrichtung (1) den Betätigungsweg der Handbremse (6) mittels des speziellen Flaschenzugsystem verkürzt und einen zusätzlichen Hubweg vorsieht, über den der Gasdruckzylinder (9) den Hebel (7) der Handbremse (6) automatisch in eine Notstellung drückt, falls die Spannung des Bremsseils (23) nachlässt, während sich der Bremshebel (7) in einer Bremsstellung befand.

14. Anhänger oder anderes Halb- oder Vollanhängerfahrzeug auf Rädern gemäß einem der Ansprüche 10 bis 13, wobei der Anhänger oder das andere Halb- oder Vollanhängerfahrzeug auf Rädern von einem Zugfahrzeug gezogen oder halbgetragen wird, **dadurch gekennzeichnet, dass** ein Notbremsseil (26) mit dem Zugfahrzeug verbunden und über einen Karabinerhaken (25) an einer Öse (16) befestigt ist, die fest mit dem Handbremshebel (7) der mechanischen Bremsvorrichtung (1) verbunden ist, wodurch die Betätigung der Handbremse (6) vom fahrenden Zugfahrzeug aus ermöglicht wird.

## Claims

1. An assisted mechanical braking device (1) for a trailer or other semi-mounted or towed wheeled vehicle comprising a wheel brake (27), said braking device (1) comprising:
- a handbrake (6) comprising a brake lever (7) capable of moving from a first position, known as 'free' position, to a second position, known as 'braking' position, a gear sector (10), a damping gas cylinder (9) located between the brake lever (7) and the gear sector (10), a pivot axis (8) for the brake lever (7) allowing the brake lever (7) to turn around the gear sector (10), and a pawl (11) located on the brake lever (7) and engaging with the teeth of the gear sector (10) to lock and hold the brake lever (7) in its braking position;
- a brake cable (23) connecting, in use, said handbrake (6) to the wheel brake (27) of the trailer;
said handbrake (6) comprising a reeving system consisting of at least one pulley, preferably at least three pulleys (15, 22), and said brake cable (23) allowing, in use, the stroke required to activate the handbrake (6) on the wheel brake (27) of the trailer to be reduced,
**characterised in that** the brake lever (7) comprises a third position, known as the 'emergency' position, into which it can engage in the event of a reduction in tension in the brake cable (23), the damping gas cylinder (9) allowing the brake lever (7) to be actuated automatically to move it from the braking position to the emergency position and to provide additional tension in the brake cable (23).

2. A mechanical braking device (1) according to claim 1, the trailer comprising a chassis (2), **characterised in that** the handbrake (6) is mounted on one side of the trailer chassis (2).

3. A mechanical braking device (1) according to one of claims 1 or 2, **characterised in that** the handbrake (6) is secured by means of a mounting bracket (18).

4. A mechanical braking device (1) according to claim 3, **characterised in that** the three pulleys (15, 22) comprise two proximal pulleys (15) fixed on either side of the gear sector (10) and a distal pulley (22) fixed to the mounting bracket (18) of the handbrake (6).

5. A mechanical braking device (1) according to claim 3, **characterised in that** the mounting bracket (18) of the handbrake (6) comprises a longitudinal section (19) fixed to the side of the trailer chassis (2), and a lateral section (20) substantially perpendicular to the longitudinal section (19), supporting the distal pulley (15) of the reeving system.

6. A mechanical braking device (1) according to any one of claims 4 and 5, **characterised in that** the distal pulley (22) is mounted adjustably on said lateral section (20), such that the distance between the distal pulley (22) and the two proximal pulleys (15) is variable.

7. A mechanical braking device (1) according to claim 6, **characterised in that** the distal pulley (22) is mounted in a fork (21) extended by a threaded rod passing through the mounting bracket (18) and held in position by a nut.

8. A mechanical braking device (1) according to any one of the preceding claims, the wheel brake device (27) of the trailer comprising a left-hand wheel brake lever (29) and a right-hand wheel brake lever (31), **characterised in that** the proximal pulleys (15) are parallel to one another and perpendicular to the distal pulley (22), and **in that** the brake cable (23) connects the left-hand wheel brake lever (29) to the right-hand wheel brake lever (31), or vice versa, passing successively through the mounting bracket (18), then round a first proximal pulley (15), then round the distal pulley (22), then round the second proximal pulley (15), and back through the mounting bracket (18).

9. A mechanical braking device (1) according to claim 8, **characterised in that** the arrangement of the pulleys distributes the forces evenly between the left- (29) and right-hand (31) wheel brake levers of the wheel brake (27).

10. A trailer or other semi-mounted or towed wheeled vehicle comprising a mechanical braking device (1) as defined in any one of the preceding claims.

11. A trailer or other semi-mounted or towed wheeled vehicle according to claim 10, **characterised in that** it comprises an inertia braking device coupled to one or more brake axle(s) with automatic reverse mechanism, each fitted with a wheel brake (27).

12. A trailer or other semi-mounted or towed wheeled vehicle according to any one of claims 10 and 11, **characterised in that** it comprises a chassis (2) and a drawbar (3), and **in that** the handbrake (6) is fixed to a side of the chassis (2) or to the drawbar (3).

13. A trailer or other semi-mounted or towed wheeled vehicle according to any one of claims 10 to 12, **characterised in that** the braking device (1) reduces the activation stroke of the handbrake (6) by means of the specific reeving system, and provides an additional stroke distance along which the gas cylinder (9) automatically pushes the lever (7) of the handbrake (6) into an emergency position in the event of a reduction in the tension of the brake cable (23) while the brake lever (7) was in a braking position.

14. A trailer or other semi-mounted or towed wheeled vehicle according to any one of claims 10 to 13, the trailer or other semi-mounted or towed wheeled vehicle being towed or semi-mounted by a towing vehicle, **characterised in that** an emergency brake wire (26) is connected to the towing vehicle and secured via a snap hook (25) to an eyelet (16) integral with the handbrake lever (7) of the mechanical braking device (1), enabling the handbrake (6) to be operated from the moving towing vehicle.
